# EUROPÄISCHE PATENTSCHRIFT

(11) **EP 2 839 340 B1**
(45) Veröffentlichungstag und Bekanntmachung des Hinweises auf die Patenterteilung: **26.07.2017**
(21) Anmeldenummer: 13715191.6
(22) Anmeldetag: 04.04.2013
(51) Int. Cl.: G03B 13/30, G01M 11/02, G03B 43/00, G02B 23/14

(54) **VERFAHREN UND VORRICHTUNG ZUR BESTIMMUNG DER SCHÄRFENTIEFE EINES OBJEKTIVS FÜR EINE MITTELS EINER MESS-OPTIK BESTIMMTE DISTANZ**
METHOD AND APPARATUS FOR INDICATING THE DEPTH OF FIELD OF A LENS FOR A DISTANCE DETERMINED BY MEANS OF A MEASURING OPTICS
PROCÉDÉ ET DISPOSITIF POUR INDIQUER LA PROFONDEUR DU CHAMP D'UN OBJECTIF POUR UNE DISTANCE DÉTERMINÉE PAR UNE OPTIQUE DE MÉSURE

(30) Priorität: 17.04.2012 DE 102012103339
(43) Veröffentlichungstag der Anmeldung: 25.02.2015
(73) Patentinhaber: Vogt, Philippe, 70190 Bussieres (FR)
(72) Erfinder: Vogt, Philippe, 70190 Bussieres (FR)
(74) Vertreter: Moser Götze & Partner Patentanwälte mbB
(86) Internationale Anmeldenummer: PCT/EP2013/057086
(87) Internationale Veröffentlichungsnummer: WO 2013/156313

(56) Entgegenhaltungen:
- CN-Y- 2 269 583
- CN-Y- 2 833 516
- DE-A1- 3 035 568
- DE-A1- 3 637 742
- US-A- 5 384 615
- Anonymous: "Leica M7 Bedienungsanleitung / Instructions", Leica Camera AG , 2004, Seiten Frontpg.-129, XP002712028, Gefunden im Internet: URL:http://de.leica-camera.com/assets/file /download.php?filename=file_1294.pdf [gefunden am 2013-08-28]

## Beschreibung

Die Erfindung betrifft ein Verfahren zur Bestimmung der Tiefenschärfe für eine bestimmte Distanz mittels einer Mess-Optik gemäß Anspruch 1 und eine entsprechende Vorrichtung sowie eine Anordnung der Vorrichtung und einer Aufnahme-Optik.

Die Tiefenschärfe oder Schärfentiefe ist ein Maß für die Ausdehnung des scharfen Bereichs im Objektraum eines abbildenden optischen Systems. Der Begriff spielt in der Fotografie eine zentrale Rolle und beschreibt die Größe des Entfernungsbereichs, innerhalb dessen ein Objekt hinlänglich scharf im Abbild der Kameraoptik erscheint. In der Regel wird eine große Schärfentiefe durch kleine Blendenöffnungen oder Objektive mit kurzen Brennweiten erreicht.

Es sind grundsätzlich zwei verschiedene Anordnungen zu unterscheiden: Die *Camera obscura,* die lediglich aus einer einzigen Lochblende besteht, und ein Linsensystem, das so eine Blende ebenfalls enthält, aber zusätzlich noch (mindestens) eine Linse (vor oder hinter der Blende), die eine reguläre optische Abbildung produziert.

Von einem Objekt ausgehende Lichtstrahlen fallen durch die Lochblende auf die Bildebene (einen Schirm, einen Film oder einen Kamerabildsensor). Je nach Durchmesser der Blende werden aus diesen Lichtstrahlen mehr oder weniger dicke kegelförmige Lichtkörper. Durch Schnitt der Bildebene mit einem Kegel entsteht auf der Ebene ein Kreis, sogenannte Zerstreuungskreise oder Unschärfekreise (Z). Sie existieren bei jeder Dimensionierung der Abstände zwischen Objekt, Blende und Bild, die Kreisgröße in der Bildebene berechnet sich nach dem Strahlensatz. Dabei ist der Einfluss des Lochblendendurchmessers einfach proportional: je größer das Loch, desto größer der Unschärfekreis. Für eine schärfere Abbildung wird ein kleineres Loch benötigt. Wird jedoch das Loch zu stark verkleinert, so wird der Bereich der geometrischen Optik verlassen und es treten die Welleneigenschaften des Lichtes in den Vordergrund. Die dabei auftretenden Beugungseffekte werden umso stärker, je kleiner das Loch ist. Hierdurch kommt es zu einer Abnahme der Schärfe. Somit gibt es für eine *Camera obscura* einen optimalen Lochdurchmesser. Weiterhin muss bei dieser Optimierung neben den Abbildungseigenschaften auch der Umstand berücksichtigt werden, dass mit einem kleineren Lochdurchmesser der Lichtstrom abnimmt und damit die Belichtungszeiten zunehmen.

Der Aufbau mit einer zusätzlichen Linse ändert am Prinzip nur so viel, dass die Linse dafür sorgt, dass (im idealen Fall) bei einer bestimmten Entfernung der Bildebene von der Linse eine scharfe Abbildung auftritt, bei dieser Position entfällt also die obige Ungenauigkeit (und die Blendenöffnung kann im Interesse besserer Lichtausbeute wesentlich vergrößert werden). Erst wenn es um Objektpunkte geht, die vor oder hinter dieser scharf abgebildeten Position liegen, verringert sich diese Schärfe und sinkt mit wachsendem Abstand auf den Wert, den die Blende allein als *Camera obscura* bewirken würde.

In der geometrischen Optik können nur diejenigen Punkte als scharfe Bildpunkte in der Bildebene (Film, Chip-Sensor) wiedergegeben werden, die auf der Ebene liegen, die sich in der Gegenstandsweite zur Linse befindet. Alle anderen Punkte, die sich auf näher oder weiter entfernt liegenden Ebenen befinden, erscheinen in der Bildebene nicht mehr als Punkte, sondern als Scheibchen, sogenannte Zerstreuungskreise oder Unschärfekreise (Z).

Zerstreuungskreise entstehen, weil die von der Linse (Objektiv) auf die Bildebene fallenden Lichtkörper Kegel sind; durch Schnitt der Bildebene mit einem Kegel entsteht auf der Ebene ein Kreis.

Eng nebeneinander liegende Punkte, die nicht in der Gegenstandsebene liegen, werden durch eng nebeneinander liegende Zerstreuungskreise abgebildet, die sich überdecken und in den Randbereichen vermischen, wodurch ein unscharfes Bild entsteht.

Somit ist es wünschenswert die Tiefenschärfe für eine bestimmte Distanz und Optik zu kennen bzw. bestimmen zu können.

Aus der DE 30 35 568 A1 und DE 36 37 742 A1 sind jeweils fotografische Kameras offenbart, die automatische Scharfeinstellungen umfassen, deren Optik ein Bild auf eine Mattscheibe wirft.

Aus der Bedienungsanleitung der sogenannten "Leica M7" geht ebenfalls eine entsprechende Scharfstellung mittels des Messsuchers der Kamera "Leica M7" hervor, wobei eine manuelle optische Fokussierung auf einer Mattscheibe mittels des menschlichen Auges erfolgt.

Aufgabe der Erfindung ist es daher eine einfache manuelle Möglichkeit bereitzustellen, um die Tiefenschärfe für eine bestimmte Distanz und Optik zu bestimmen und anzugeben.

Diese Aufgabe wird durch das in Anspruch 1 wiedergegebene Verfahren bzw. der in Anspruch 7 angegebenen Vorrichtung gelöst.

Erfindungsgemäß ist erkannt worden, dass die Tiefenschärfe exakt und einfach bestimmt werden kann mit einem Verfahren umfassend die Schritte:
- manuelle optische Fokussierung der Mess-Optik mittels des menschlichen Auges ohne Projektion auf eine Mattscheibe bzw. dazwischenliegende Projektionsfläche;
- Überwachung der Bewegung der Mechanik der Mess-Optik bei der Fokussierung;
- Bestimmung und Angabe der eingestellten Distanz aus der Bewegung,
wobei unter Berücksichtigung von Brennweite, Blende, Hyperfokaldistanz und Zerstreukreise der Bereich der Tiefenschärfe zur justierten Distanz rechnerisch bestimmt und angegeben wird.

Es kann daher auf Laufzeitmessungen etc. verzichtet werden, so dass sich allein auf die Genauigkeit der Mess-Optik verlassen wird, was relativ störungsfrei ist. Zu dem kann so genau das Objekt fokussiert werden, dessen Entfernung und Bereich der umgebenden Schärfe von Interesse ist.

Es wird ohne Projektion eines Bildes zum Scharfstellen auf eine Mattscheibe direkt mit dem menschlichen Auge gearbeitet, auf das die Optik angepasst ist. Es wird also ohne dazwischenliegende Projektionsfläche zwischen Optik und Auge gearbeitet.

Es erfolgt demnach auch keine Projektion auf einen Bildsensor, A/D Wandler etc., sondern der Augapfel dient als Projektionsfläche unter bewusstem Verzicht der Mattscheibe.

Berücksichtigt werden kann auch der sogenannte Fokus Shift. Focus Shift (FS) bedeutet eine Verschiebung der Schärfeebene in Abhängigkeit von der eingestellten Blende. Die Stärke des Focus Shift ist abhängig vom Konzept (Design) des jeweiligen Objektivs und hängt grundsätzlich nicht von der benutzten Kamera ab. Der FS kann daher nur durch Korrekturen behoben werden, die das jeweilige Objektiv betreffen.

Durch Auswertung der über das Auge eingestellten Schärfe erfolgt die Bestimmung der eingestellten Distanz schnell und genau. Dies ist eine Voraussetzung des Verfahrens zur Bestimmung der Tiefenschärfe.

Es erfolgt also durch Auswertung und Abgleich des mechanischen Sensors eine exakte Bestimmung der Schärfe bzw. Distanz auf optischer Basis mittels des menschlichen Auges. Die Überwachung der Mechanik ist wesentlich genauer, als die reine manuelle Fokussierung. Durch Verzicht auf einen Autofokus werden eine kleine kompakte Bauweise und ein geringer Stromverbrauch erlaubt.

Als Mess-Optik wird eine Optik verstanden, die vorliegend nur für die Messung der Entfernung für die Tiefenschärfe-Bestimmung eingesetzt wird. Im Gegensatz dazu dient die Aufnahme-Optik zur Aufnahme von Bildern, wie z.B. bei einer Kamera.

Um die Mess-Optik möglichst wenig zu beeinflussen und besonders exakt zu überwachen, ist in einer Ausführungsform vorgesehen, dass die Mechanik berührungslos Überwacht wird. Als Sensor dafür kommt z.B. ein induktiv gekoppelter Drehsensor in Betracht, der beispielsweise die Gewindeschnecke über ein Reibrad abgreift.

In der einfachsten Form erfolgt die Bestimmung der eingestellten Distanz aus der Bewegung der Optik tabellarisch; d.h. es ist für den Rechner hinterlegt, welche Bewegung des Sensors welcher Entfernung bzw. relativen Änderung der Optik entspricht. Somit kann aus dem Ausmaß der Bewegung der Optik auf die eingestellte Entfernung geschlossen werden.

Sinnvollerweise wird nicht nur eine einzelne Tiefenschärfe bestimmt, sondern, die Bestimmung und Angabe des Bereichs der Tiefenschärfe erfolgt für mehrere Blendenwerte, z.B. 5,6, 8, 11 und 16. Somit wird dem Fotograf ein Anhaltspunkt für die Blendenwahl an die Hand gegeben.

Das beschriebene Verfahren eignet sich aber auch zur direkten Verwendung mit einer Aufnahme-Optik. Dazu wird die Mess-Optik mit einer Aufnahme-Optik abgeglichen, d.h. die Einstellung der Schärfe der Aufnahme-Optik wird mit derjenigen der Mess-Optik abgeglichen und ggf. bei Abweichungen die Mess-Optik nachjustiert, so dass die Tiefenschärfe exakt für die Einstellungen der Aufnahme-Optik bestimmbar und verwendbar ist.

Vorzugsweise geben dazu Richtungsanzeigen die Verstellrichtung der Mess-Optik beim Nachjustieren zum Abgleich mit der Aufnahme Optik an.

Es wird also in anderen Worten, zunächst eine Optik per Auge manuell scharfgestellt und diese Einstellung anschließend über eine Nachjustierung korrigiert. Der korrigierte Wert wird verwendet, um rechnerisch die Tiefenschärfe zu bestimmen, wobei Brennweite, Blende, Hyperfokaldistanz und Zerstreukreise berücksichtigt werden. Anschließend wird der Nah- und Fernpunkt der Schärfe, also die Schärfentiefe ausgegeben.

Somit kann die die Bewegung der Mechanik beim Nachjustieren der Optik überwacht werden, d.h. das Ausmaß der Bewegung bestimmt und in die korrigierte Distanzermittlung einfließen.

Um die korrekte Verstellrichtung für den Benutzter anzugeben, ist es sinnvoll, wenn Richtungsanzeigen die Verstellrichtung der Optik beim Nachjustieren angeben. Hierbei können einfache Anzeigen, wie Pfeile oder einfach LEDs zum Einsatz kommen, die entsprechend ihrer Anordnung z.B. eine Drehrichtung nach Links oder Rechts durch Leuchten angeben.

Zur Umsetzung des Verfahrens eignet sich eine Vorrichtung umfassend eine manuell fokussierbare mattscheibenfreie Mess-Optik, einen Rechner, eine Ausgabeeinheit, und einen Sensor, wobei die Mess-Optik Verstellmittel für die manuelle Fokussierung mittels des menschlichen Auges aufweist, der eine Sensor die Bewegung der manuellen Fokussierung überwacht, und wobei der Rechner zur Bestimmung der Distanz durch Auswertung der Signale des Sensors von der überwachten Mechanik eingerichtet ist, so dass unter Berücksichtigung von Brennweite, Blende, Hyperfokaldistanz und Zerstreukreise der Rechner den Bereich der Tiefenschärfe zur Distanz rechnerisch bestimmt und ausgibt.

Als Optik kommt bevorzugt ein Objektiv, insbesondere ein Kepler Monokular, zum Einsatz.

Vorzugsweise ist eine Anzeige zur Angabe der Distanz und Tiefenschärfe vorgesehen. Alternativ oder zusätzlich könnte die Angabe akustisch erfolgen.

Der Sensor ist einer bevorzugten Ausführungsform über ein Reibrad mit der drehbaren Mechanik der Mess-Optik verbunden, insbesondere mit dem Schneckengewinde, so dass eine hohe Genauigkeit erreicht wird.

Sinnvoll ist es, wenn der Sensor berührungslos die Bewegung der Mechanik der Optik überwacht, vorzugsweise induktiv, da diese somit genau und unbeeinflusst abgegriffen werden kann.

Wenn die Vorrichtung mit einer Aufnahme-Optik zu einer Anordnung verbunden ist, insbesondere einer Kamera, wobei die Vorrichtung mit der Aufnahme-Optik elektronisch zum Datenaustausch verbunden ist und die Vorrichtung eingerichtet ist, um von der Aufnahme-Optik deren eingestellte Brennweite und deren eingestellte Fokussierung zu empfangen, wobei der Rechner der Vorrichtung programmiert ist, um einen Abgleich mit der Auswertung der Signale des Sensors von der überwachten Mechanik durchzuführen, kann so die Tiefenschärfe exakt für die Einstellungen der Aufnahme-Optik mittels der Vorrichtung bestimmt werden (vgl. oben).

Weitere Merkmale und Einzelheiten der Erfindung ergeben sich aus der nachfolgenden Beschreibung der Zeichnung. Es zeigen:

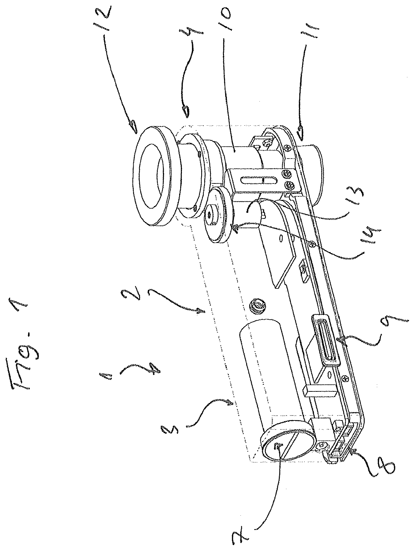

Fig. 1 eine schematische perspektivische sowie teil-transparente Ansicht einer Vorrichtung zur Bestimmung der Tiefenschärfe für eine bestimmte Distanz und

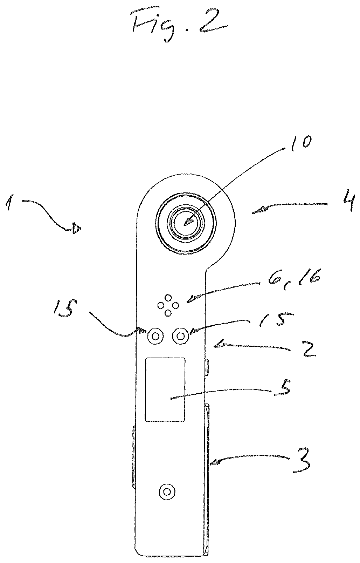

Fig. 2 eine Draufsicht auf die Vorrichtung aus Figur 1 auf die von der Figur 1 abgewandte Seite sowie
Fig. 3 ein Flussdiagramm des Ablaufs der Verwendung der Vorrichtung aus Figur 1 zur Bestimmung der Tiefenschärfe für eine bestimmte Distanz.

In den Figuren ist eine als Ganzes mit 1 bezeichnete Vorrichtung zur Bestimmung der Tiefenschärfe für eine bestimmte Distanz gezeigt.

Die Vorrichtung umfasst ein längliches Gehäuse 2, das ein stabförmiges Griffteil 3 und einen Optikteil 4 ausbildet. In dem Griffteil 3 sind ein Rechner (nicht sichtbar), eine Anzeige 5, Bedienelemente 6, ein Batteriefach 7 zur Stromversorgung, elektrische und elektronische Schnittstellen 8 für die stationäre Stromversorgung und/oder elektronische Anbindung an eine Kamera und ein Speicherkarteneinschub 9 für eine Speicherkarte vorhanden.

In dem Optikteil 4 ist im Wesentlichen die Mess-Optik 10 mit der vorstehenden Augenmuschel 11 auf der einen Seite und dem Fokussierring 12 auf der anderen Seite enthalten. Als Optik kommt ein Kepler Monokular zum Einsatz.

Im Bereich des Übergangs zwischen Optikteil 4 und Griffteil 3 ist ein Sensor 13 angeordnet, der über ein Reibrad 14 mit der drehbaren Mechanik (Schnecke) der Mess-Optik 10 verbunden ist. Der Sensor ist ein induktiver Drehsensor und tastet berührungslos die Bewegung der Mechanik der Mess-Optik ab.

Die Anzeige 5 dient zur Angabe der Distanz und Tiefenschärfe.

Zusätzlich sind Richtungsanzeigen15 in Form von LED's für die Anzeige der Verstellrichtung der Optik beim Nachjustieren vorgesehen. Diese kommen zum Einsatz bei der Verwendung der Vorrichtung als Anordnung mit einer elektronisch angebundenen Kamera (vgl. unten).

Es wird nicht nur eine einzelne Tiefenschärfe bestimmt und angezeigt, sondern die Bestimmung und Anzeige des Bereichs der Tiefenschärfe erfolgt für mehrere Blendenwerte 5, 6, 8, 11 und 16 auf der Anzeige 5. Somit wird dem Fotograf ein Anhaltspunkt für die Blendenwahl an die Hand gegeben.

Zusätzlich ist ein Betätigungstaster 16 zum Ein- und Ausschalten vorgesehen.

Die Vorrichtung funktioniert bzw. wird alleine wie folgt verwendet:
Zunächst wird die Optik 10 am Fokussierring 12 per Auge manuell scharfgestellt. Diese Schärfe ist die eingestellte Schärfe bzw. Distanz. Diese Einstellung wird vom Sensor 13 erfasst und daraufhin tabellarisch die Entfernung vom Rechner ermittelt und entsprechend die Tiefenschärfe berechnet.

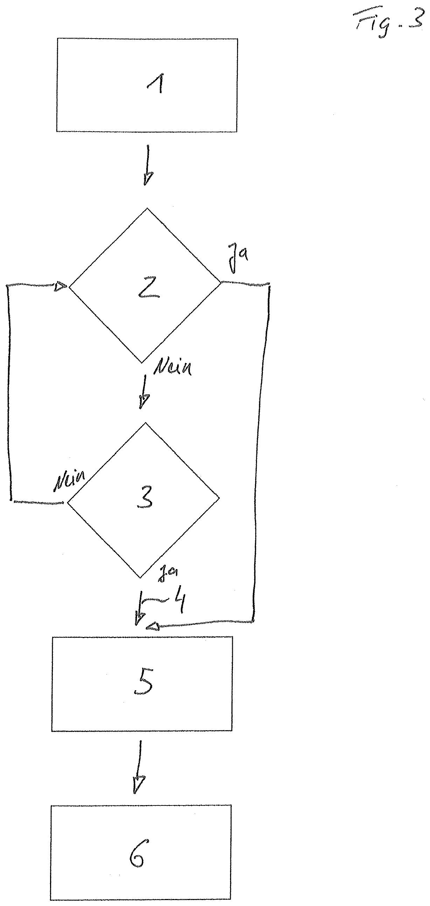

Die Vorrichtung funktioniert bzw. wird wie folgt verwendet (vgl. Figur 3), wenn sie mit einer Kamera gekoppelt (z.B. per USB Kabel über die Schnittstelle 8) ist.
Zunächst wird die Optik 10 am Fokussierring 12 per Auge manuell scharfgestellt. Diese Schärfe ist die eingestellte Schärfe bzw. Distanz. Diese Einstellung wird vom Sensor 13 erfasst und daraufhin tabellarisch die Entfernung vom Rechner ermittelt (analog oben). Diese Einstellung wird mit der an der Kamera eingestellten Schärfe bzw. Distanz verglichen, wozu ein Datenaustausch bzw. Abgleich über die Schnittstelle 8 stattfindet. (Schritt 1)

Daraufhin wird überprüft, ob die eingestellte Schärfe bzw. so gewählte Distanz korrekt ist bzw. mit derjenigen der Kamera übereinstimmt (Schritt 2).

Üblicherweise wird dies nicht der Fall sein.

Durch Blinken der LED's 15 wird die notwendige Verstellrichtung für die Nachjustierung der Mess-Optik angezeigt (Schritt 3), d.h. wenn der Fokussierring 12 gegen den Uhrzeiger verdreht werden muss zum Nachjustieren, blinkt die linke LED. In der umgekehrten Weise blinkt die rechte LED für die andere Verstellrichtung des Fokussierrings 12. Anhand der LED's 15 wird über den Fokussierring 12 die Schärfe bzw. Distanz nachjustiert, bis die eingestellte Distanz bzw. die korrekte mit der Kamera übereinstimmende Schärfe eingestellt ist (Schritt 4).

Ermittelt die Vorrichtung die Einstellung der korrekten Schärfe bzw. Distanz, leuchten beide LED dauerhaft auf (Schritt 5).

Diese Einstellung ist die korrigierte oder nachjustierte Schärfe bzw. Distanz. Diese wird vom Rechner verwendet, um rechnerisch die Tiefenschärfe zu bestimmen, wobei Brennweite, Blende, Hyperfokaldistanz und Zerstreukreise berücksichtigt werden, die von der Kamera aus dem Datenaustausch stammen.

Die errechneten Werte (Schritt 6) werden auf der Anzeige 5 ausgegeben, wobei Nah- und Fernpunkte der Schärfe für mehrere Blenden (vgl. oben) angegeben werden.

Somit gibt die Vorrichtung nun die Werte aus, die auch für die Kamera gelten.

## Patentansprüche

1. Verfahren zur Bestimmung der Tiefenschärfe für eine bestimmte Distanz mittels einer Mess-Optik umfassend die Schritte:
- manuelle optische Fokussierung der Mess-Optik mittels des menschlichen Auges ohne Projektion auf eine Mattscheibe bzw. dazwischenliegende Projektionsfläche;
- Überwachung mittels eines Sensors (13) der Bewegung der Mechanik der Mess-Optik bei der Fokussierung;
- Bestimmung und Angabe der eingestellten Distanz aus der Bewegung,
wobei unter Berücksichtigung von Brennweite, Blende, Hyperfokaldistanz und Zerstreukreise der Bereich der Tiefenschärfe zur justierten Distanz rechnerisch bestimmt und angegeben wird, **dadurch gekennzeichnet, dass** die Bestimmung der eingestellten Distanz aus der Bewegung der Optik tabellarisch erfolgt.

2. Verfahren nach Anspruch 1, **dadurch gekennzeichnet, dass** die Mechanik berührungslos Überwacht wird.

3. Verfahren nach einem der vorhergehenden Ansprüche, **dadurch gekennzeichnet, dass** die Bestimmung und Angabe des Bereichs der Tiefenschärfe für mehrere Blendenwerte erfolgt.

4. Verfahren nach einem der vorhergehenden Ansprüche, **dadurch gekennzeichnet, dass** die Mess-Optik mit einer Aufnahme-Optik abgeglichen wird.

5. Verfahren nach einem der vorhergehenden Ansprüche, **dadurch gekennzeichnet, dass** Richtungsanzeigen die Verstellrichtung der Mess-Optik beim Nachjustieren zum Abgleich mit der Aufnahme Optik angeben.

6. Vorrichtung (1) zur Bestimmung der Tiefenschärfe für eine bestimmte Distanz, insbesondere nach einem Verfahren nach einem der vorhergehenden Ansprüche, umfassend eine manuell fokussierbare mattscheibenfreie Mess-Optik (4, 10), einen Rechner, eine Ausgabeeinheit (5), und einen Sensor, wobei die Mess-Optik (10)Verstellmittel (12) für die manuelle Fokussierung mittels des menschlichen Auges aufweist, der eine Sensor (13) die Bewegung der manuellen Fokussierung (12) überwacht, und wobei der Rechner zur Bestimmung der Distanz durch Auswertung der Signale des Sensors (13) von der überwachten Mechanik (12) eingerichtet ist, so dass unter Berücksichtigung von Brennweite, Blende, Hyperfokaldistanz und Zerstreukreise der Rechner den Bereich der Tiefenschärfe zur Distanz rechnerisch bestimmt und ausgibt **dadurch gekennzeichnet, dass** die Bestimmung der eingestellten Distanz aus der Bewegung der Optik tabellarisch erfolgt.

7. Vorrichtung nach Anspruch 6, **dadurch gekennzeichnet, dass** die Mess-Optik (10) ein Objektiv, insbesondere ein Kepler Monokular, ist.

8. Vorrichtung nach Anspruch 6 oder 7, **dadurch gekennzeichnet, dass** eine Anzeige (5) zur Angabe der Distanz und Tiefenschärfe vorgesehen ist.

9. Vorrichtung nach einem der Ansprüche 6 - 8, **dadurch gekennzeichnet, dass** der Sensor (13) über ein Reibrad (14) mit der drehbaren Mechanik der Mess-Optik (10) verbunden ist.

10. Vorrichtung nach einem der Ansprüche 6 - 9, **dadurch gekennzeichnet, dass** der Sensor (13) induktiv arbeitet.

11. Anordnung einer Vorrichtung nach einem der Ansprüche 6 bis 10 und einer Aufnahme-Optik, einer Kamera, wobei die Vorrichtung mit der Aufnahme-Optik über die Kamera elektronisch zum Datenaustausch verbunden ist und die Vorrichtung eingerichtet ist, um von der Aufnahme-Optik deren eingestellte Brennweite und deren eingestellte Fokussierung zu empfangen, wobei der Rechner der Vorrichtung programmiert ist, um einen Abgleich mit der Auswertung der Signale des Sensors von der überwachten Mechanik durchzuführen.

12. Anordnung nach Anspruch 11, **dadurch gekennzeichnet, dass** die Vorrichtung Richtungsanzeigen (15), vorzugswiese LED's, für eine Verstellrichtung der Mess-Optik (10) aufgrund des Abgleichs aufweist.

## Claims

1. A method of determining the depth of field for a predetermined distance by means of an optical measuring system including the steps:
- manually optically focusing the optical measuring system by means of the human eye without projection onto a diffusing screen or an intermediary projection surface;
- monitoring the movement of the mechanism of the optical measuring system during the focusing by means of a sensor (13);
- determining and indicating the set distance from the movement, wherein the range of the depth of field to the set distance is arithmetically determined and indicated taking account of focal length, aperture, hyperfocal distance and scattering circles, **characterised in that** the determination of the set distance from the movement of the optical measuring system is effected tabularly.

2. A method as claimed in Claim 1, **characterised in that** the mechanism is monitored contactlessly.

3. A method as claimed in one of the preceding claims, **characterised in that** the determination and indication of the range of the depth of field is effected for a plurality of aperture values.

4. A method as claimed in one of the preceding claims, **characterised in that** the optical measuring system is calibrated with an optical recording system.

5. A method as claimed in one of the preceding claims, **characterised in that** direction indicators indicate the direction of movement of the optical measuring system when readjusting for the purpose of calibration with the optical recording system.

6. Apparatus (1) for determining the depth of field for a predetermined distance, particularly in accordance with a method as claimed in one of the preceding claims, including a manually focusable optical measuring system (4, 10) without a diffusing screen, a computer, an output unit (5) and a sensor, wherein the optical measuring system (10) includes adjustment means (12) for the manual focusing by means of the human eye, the one sensor (13) monitors the movement of the manual focusing (12), and wherein the computer is arranged to determine the distance by analysis of the signals from the sensor (13) of the monitored mechanism (12), so that the computer determines and indicates the range of the depth of field to the distance arithmetically taking account of focal length, aperture, hyperfocal distance and scattering circles, **characterised in that** the determination of the set distance from the movement of the optical system is effected tabularly.

7. Apparatus as claimed in Claim 6, **characterised in that** the optical measuring system (10) is an objective lens, particularly a Kepler Monocular.

8. Apparatus as claimed in Claim 6 or 7, **characterised in that** an indicator (5) is provided for indicating the distance and depth of field.

9. Apparatus as claimed in one of Claims 6-8, **characterised in that** the sensor (13) is connected via a friction wheel (14) to the rotatable mechanism of the optical measuring system (10).

10. Apparatus as claimed in one of Claims 6-9, **characterised in that** the sensor (13) operates inductively.

11. An arrangement of an apparatus as claimed in one of Claims 6 to 10 and an optical recording system, a camera, wherein the apparatus is electronically connected to the optical recording system via the camera for the purpose of data exchange and the apparatus is arranged to receive from the optical recording system its set focal length and its set focusing, wherein the computer of the apparatus is programmed to perform a calibration with the analysis of the signals of the sensor of the monitored mechanism.

12. An arrangement as claimed in Claim 11, **characterised in that** the apparatus includes direction indicators (15), preferably LEDs, for an adjustment direction of the optical measuring system (10) based on the calibration.

## Revendications

1. Procédé de détermination de la profondeur de champ sur une certaine distance au moyen d'un système optique de mesure, le procédé comprenant les étapes consistant à :
- effectuer une focalisation optique manuelle du système optique de mesure à l'oeil humain sans projection sur un écran dépoli ou une surface de projection intermédiaire ;
- surveiller au moyen d'un capteur (13) le mouvement de la mécanique du système optique de mesure lors de la focalisation ;
- déterminer et indiquer la distance réglée à partir du mouvement, la gamme de profondeur de champ par rapport à la distance réglée étant déterminée et indiquée par calcul avec prise en compte de la distance focale, de l'ouverture, de la distance hyperfocale et du cercle de divergence, **caractérisé en ce que** la détermination de la distance réglée à partir du mouvement du système optique est effectuée sous forme de tableau.

2. Procédé selon la revendication 1, **caractérisé en ce que** le mécanisme est surveillé sans contact.

3. Procédé selon l'une des revendications précédentes, **caractérisé en ce que** la détermination et l'indication de la gamme de profondeur de champ sont effectuées pour une pluralité de valeurs d'ouverture.

4. Procédé selon l'une des revendications précédentes, **caractérisé en ce que** le système optique de mesure est réglé avec un système optique d'enregistrement.

5. Procédé selon l'une des revendications précédentes, **caractérisé en ce que** les indications directionnelles donnent la direction de réglage du système optique de mesure lors du réajustement pour effectuer le réglage avec le système optique d'enregistrement.

6. Dispositif (1) destiné à déterminer la profondeur de champ sur une certaine distance, en particulier par un procédé selon l'une des revendications précédentes, comprenant un système optique de mesure sans écran dépoli (4, 10) focalisable manuellement, un calculateur, une unité de sortie (5) et un capteur, le système optique de mesure (10) comportant des moyens de réglage (12) destinés à la focalisation manuelle à l'oeil humain, un capteur (13) surveillant le mouvement de la focalisation manuelle (12) et le calculateur étant adapté pour déterminer la distance en évaluant les signaux du capteur (13) du mécanisme de surveillance (12) de telle sorte que le calculateur détermine par calcul et délivre en sortie la gamme de profondeur de champ par rapport à la distance en tenant compte de la distance focale, de l'ouverture, de la distance hyperfocale et du cercle de divergence, **caractérisé en ce que** la détermination de la distance réglée à partir du mouvement du système optique est effectuée sous forme de tableau.

7. Dispositif selon la revendication 6, **caractérisé en ce que** le système optique de mesure (10) est un objectif, en particulier un monoculaire de Kepler.

8. Dispositif selon la revendication 6 ou 7, **caractérisé en ce qu'**il est prévu un dispositif d'affichage (5) pour indiquer la distance et la profondeur de champ.

9. Dispositif selon l'une des revendications 6 à 8, **caractérisé en ce que** le capteur (13) est relié, par l'intermédiaire d'une roue de friction (14), à la mécanique rotative du système optique de mesure (10).

10. Dispositif selon l'une des revendications 6 à 9, **caractérisé en ce que** le capteur (13) fonctionne par induction.

11. Ensemble constitué d'un dispositif selon l'une des revendications 6 à 10 et un système optique d'enregistrement, une caméra, le dispositif étant relié électroniquement au système optique d'enregistrement pour échanger des données et le dispositif est adapté pour recevoir du système optique de réception sa distance focale réglée et sa focalisation réglée, le calculateur du dispositif étant programmé pour effectuer un réglage avec l'évaluation des signaux du capteur de la mécanique surveillée.

12. Ensemble selon la revendication 11, **caractérisé en ce que** le dispositif comporte des indications directionnelles (15), de préférence des LED, pour une direction de réglage du système optique de mesure (10) sur la base du réglage.
